Europäisches Patentamt

European Patent Office

Office européen des brevets

(11) Publication number: **0 511 427 A1**

# EUROPEAN PATENT APPLICATION

(21) Application number: **91107034.0**

(22) Date of filing: **30.04.91**

(51) Int. Cl.5: **B60R 19/32**, B60T 7/22

(43) Date of publication of application:
**04.11.92 Bulletin 92/45**

(84) Designated Contracting States:
**DE FR GB IT SE**

(71) Applicant: **Mishi, Duan**
**401 South Building, 170 Xi Zhi Men**
**Beijing(CN)**
Applicant: **Lihua, Wu**
**401 South Building, 170 Xi Zhi Men**
**Beijing(CN)**

(72) Inventor: **Mishi, Duan**
**401 South Building, 170 Xi Zhi Men**
**Beijing(CN)**
Inventor: **Lihua, Wu**
**401 South Building, 170 Xi Zhi Men**
**Beijing(CN)**

(74) Representative: **Howden, Christopher Andrew**
**et al**
**FORRESTER & BOEHMERT**
**Franz-Joseph-Strasse 38**
**W-8000 München 40(DE)**

(54) Motor road vehicle and energy absorbing buffers therefor.

(57) A motor road vehicle 10 has a protective bumper 12 at the front and/or rear and/or the sides of the vehicle structure 11. Each bumper is mounted to the structure by buffers 13 designed to be shortened when the bumper is struck during a collision involving the vehicle. The buffer absorbs energy and converts it into heat by pumping a fluid or distorting a solid. At the beginning of the collision, a sensor 21 in or on the buffer may be arranged to apply the vehicle brakes 29.

FIG 2

This invention relates to motor road vehicles and energy absorbing buffers therefor.

In collisions between moving motor road vehicles and other bodies, such as other road vehicles, whether stationary or moving, or trees, buildings or the like, much of the kinetic energy of the moving road vehicle is dissipated as distortion of the or each motor road vehicle involved in the collision. It is an object of the present invention to reduce such distortion and to reduce the magnitude of the deceleration of any moving road vehicle or the acceleration of any stationary road vehicle involved in the collision, so as to reduce the severity of injury to the occupants of any of said vehicles.

According to one aspect of the present invention, there is provided a buffer, to be installed in a motor road vehicle between a bumper thereof and a load carrying structure thereof, the buffer being adapted to be deformable when a collision forces the bumper towards said structure, and in which energy is absorbed by movement of a material forming part of the buffer. Conveniently, the buffer includes a pump means to displace a fluid material within the buffer when subject to said deformation and flow restricting means to allow a controlled rate of flow of the displaced fluid material. The pump means may be a piston and cylinder means, at least partly filled with a liquid.

Preferably the buffer includes spring means adapted to bias the buffer into an extended configuration, so as to locate the bumper away from said structure, before any collision, and to urge the bumper away from said structure after any collision.

The spring means may be a pre-compressed compression spring.

A suitable restricting means comprises one or more orifices of a size selected for the anticipated duty to be performed by the buffer.

According to another aspect of the invention there is provided a motor road vehicle incorporating at least one of said energy absorbing buffers.

Conveniently the vehicle includes two of said buffers mounted between the bumper and the structure thereof.

Such bumpers and buffers may be provided at the front and/or the rear and/or the sides of the vehicle.

Preferably, sensor means are provided on the bumper or on part of the buffer, to detect the start of a collision and to cause application of brakes on the vehicle.

Such sensor means may include a piezo-electric pick-up or other acceleration transducer responsive to abnormal acceleration thereof at the start of the collision and connected to cause application of the brakes.

Various embodiments of the invention are described, by way of example only, with reference to the accompanying drawings, which are of a diagrammatic nature, and in which:

Figure 1 is a plan view of part of a motor road vehicle.

Figure 2 is a longitudinal cross-section at enlarged scale of a buffer used in the vehicle shown in Figure 1, and;

Figure 3 is a circuit diagram of part of a brake system of the vehicle shown in Figure 1.

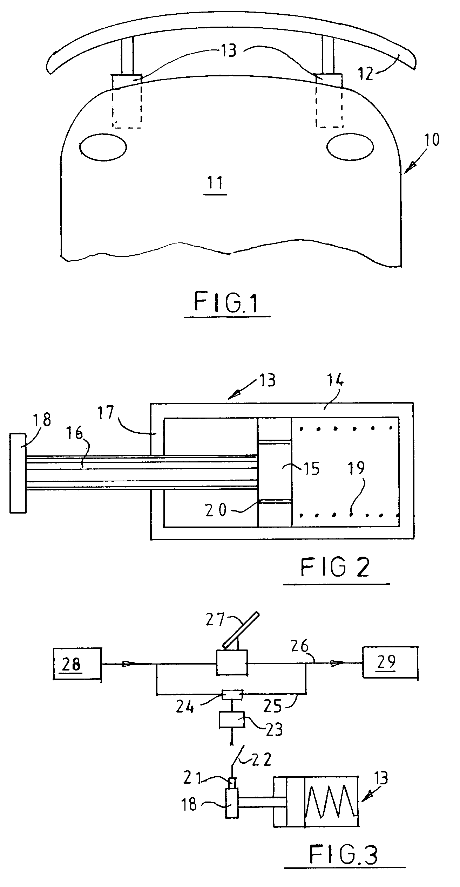

In Figure 1, a motor road vehicle 10 has a passenger compartment 11 and, across the front of the vehicle and substantially parallel to the ground, a bumper 12, preferably of similar shape in plan to the front of the vehicle 10 and spaced forwardly thereof.

The bumper 12 is mounted to the vehicle 10 by a pair of buffers 13, which are shown in more detail in Figure 2.

A similar bumper 12 and buffers 13 can be provided at the rear of the vehicle 10, and in the case of specialised vehicles such an arrangement could be provided along one or both sides thereof, the front, rear and sides of the vehicle comprising peripheral boundaries thereof.

In Figure 2, the buffer 13 comprises a rigid sealed cylinder 14 in which a close fitting piston 15 is slidable. The piston 15 is mounted on a piston rod 16 slidable through one end 17 of the cylinder 14 and sealed thereto. The external end of the piston rod 16 carries a convenient mounting 18 for the bumper 12.

The piston 15 is biased towards the end 17 by a precompressed compression spring 19, so that the piston rod 16 protrudes fully from the cylinder 14, to hold the bumper 12 at its maximum distance from the body of the vehicle 10.

The piston 15 has a ring of orifices 20 drilled therethrough or alternatively grooves may be formed in the periphery of the piston 15, parallel to the piston rod 16.

The cylinder 14 is substantially filled with oil of a suitable type. Thus, at the commencement of a collision involving the front end of the vehicle 10, the bumper 12 is moved back towards the vehicle 10, causing the piston rod 16 to be forced towards the right in Figure 2, into the cylinder 14, taking the piston 15 therewith. Oil on the right hand side of the piston 15 is displaced through the orifices 20 into the space on the left hand side of the piston 15 and because of the resistance to flow of the oil through the orifices 20, a pressure difference is generated across the piston 15, exerting a cushioning force on the vehicle 10 and dissipating the kinetic energy of the collision by turning it into heat, through turbulence of the oil in the buffer 13.

If no damage has been done to the buffer 13 during the collision, the spring 19 subsequently pushes the piston 15 towards the left, in Figure 2, displacing the oil back into the right hand side of the cylinder 14 and causing the piston rod 16 and the bumper 12 carried thereby to be restored to their normal positions. In order to avoid excessive pressure within the cylinder 14, caused by the finite volume of the piston rod 16, as it enters the cylinder 14, the piston rod 16 may be extended through the right hand end of the cylinder 14, in Figure 2, or a small amount of gas may be trapped within the cylinder 14. In fact, by the provision of a suitable volume of permanently pressurised gas within, or connected to the interior of the cylinder 14, the spring 19 may be omitted.

Instead of the buffer 13 comprising a piston 15 and cylinder 14 arrangement filled with oil, other types of buffer may be used provided that, when the buffer 13 is deformed, energy is absorbed by movement of a material forming part of the buffer 13 and converted into heat. For example, a solid material may be deformed such as by crushing, bending, buckling or tearing sheet metal or other solid material within or comprising the cylinder 14. Instead of a liquid within the cylinder 14, flow of a powdered solid therein may be utilised.

Figure 3 shows the buffer 13 carrying, on the bumper mounting 18, a piezo-electric pick-up or transducer 21, which emits an electrical signal dependent on the acceleration of the mounting 18 towards the buffer 13. The transducer 21 is connected through a switch 22 and an amplifier or signal processor 23 to a solenoid valve 24 operable in a branch 25 of a brake line 26 of the vehicle 10. The branch 25 is in parallel with the normal brake operating pedal 27, which controls the flow of pressurised fluid from a source 28 thereof to the brakes 29. The arrangement shown in Figure 3 is applicable to vehicles in which the brakes 29 are actuated by admission of pressurised air or liquid from the source 28, which may be a pump and/or reservoir, by operation of the brake pedal 27.

When a collision starts to occur, the first acceleration of the bumper 12 and mounting 18 causes the transducer 21 to emit an electrical signal which is processed by the circuitry 23. If the acceleration of the transducer 21 is above a certain magnitude, a signal is sent to the solenoid valve 24 which opens and admits brake fluid pressure to the brakes 29, so as to apply the vehicle brakes. The switch 22 can be opened to prevent such automatic operation of the brakes, if required.

Instead of the transducer 21 being a piezo-electric type, it could be an acceleration-sensitive switch, set to conduct at a predetermined value of acceleration or any other appropriate type of transducer.

On vehicles in which fluid pressure to operate the brakes 29 is generated by movement of the brake pedal 27 itself, but which is assisted by a vacuum servo, the solenoid valve 24 could be used to apply the full vacuum to the servo, without operation of the pedal 27 itself.

As an alternative to the brakes 29 being operated in response to the acceleration of the bumper 12, they could be operated in response to changes in another suitable parameter which depends on the position of the mounting 18 relating to the cylinder 14. For example, the pressure difference across the piston 15 could be used to actuate the brakes 29. Similarly, a linear transducer producing a signal dependent on the relative positions of the mounting 18 and the cylinder 14, or a velocity transducer sensitive to the relative velocity therebetween, could be used.

The features disclosed in the foregoing description, in the following claims and/or in the accompanying drawings may, both separately and in any combination thereof, be material for realising the invention in diverse forms thereof.

## Claims

1. A buffer (13) to be installed in a motor road vehicle (10) between a bumper (12) thereof and a load-carrying structure (11) thereof, characterised by the buffer being deformable when a collision forces the bumper (12) towards said structure (11), and in which energy is absorbed by movement of a material forming part of the buffer.

2. A buffer, according to Claim 1, characterised in that the buffer includes a pump means (14, 15) to displace a fluid material within the buffer when subject to said deformation and flow restricting means (20) to allow a controlled rate of flow of the displaced fluid material.

3. A buffer, according to claim 2 characterised in that the pump means is a piston (15) and cylinder means (14), at least partly filled with a liquid.

4. A buffer, according to any of Claims 1 to 3, characterised by spring means (19) positioned to bias the buffer (13) into an extended configuration, so as to locate the bumper (12) away from said structure (11), before any collision, and to urge the bumper away from said structure after the collision.

5. A buffer according to Claim 4, characterised in that the spring means is a pre-compressed compression spring.

**6.** A buffer, according to Claim 2, characterised in that the restricting means comprises one or more orifices (20) of a size selected for the anticipated duty to be performed by the buffer.

**7.** A motor road vehicle (10) including brakes (29) thereof, brake control means (24,25), sensor means (21,23) on the vehicle, the sensor means being responsive to a parameter which changes at the start of a collision and means (26,27,28) to apply the brakes on receipt of a signal from the sensor means.

**8.** A motor road vehicle including a load-carrying structure (11), a bumper (12) forming a part of a peripheral boundary of the vehicle, characterised by the vehicle including at least one buffer (13), according to any of claims 1 to 6, between said bumper (12) and the load-carrying structure (11).

**9.** A motor road vehicle according to Claim 8, characterised by sensor means (21,22,23) provided on the bumper (12) or on part (18) of the buffer, to detect the start of a collision and to cause application of brakes (29) on the vehicle.

**10.** A motor road vehicle (10), according to Claim 9 characterised in that the sensor means is an accelerometer.

**11.** A motor road vehicle, according to Claim 10, characterised in that the sensor means (21) includes an acceleration transducer (21) responsive to abnormal acceleration thereof at the start of the collision and connected to cause application of the brakes.

**12.** A buffer constructed and arranged and adapted to operate substantially as described herein and as shown in the accompanying drawings.

**13.** A motor road vehicle (10) constructed and arranged and adapted to operate substantially as described herein and as shown in the accompanying drawings.

FIG.1

FIG 2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 369 077 (XIAOSHENG)<br>* column 2, lines 9-41 *<br>--- | 1-6,12 | B 60 R 19/32<br>B 60 T 7/22 |
| X | US-A-3 885 776 (BLATT)<br>* column 2, lines 43-56 *<br>--- | 1-6,12 | |
| X | FR-A-2 185 981 (FERODO)<br>* page 2, lines 15-27 *<br>--- | 1-6,12 | |
| X | CH-A- 89 356 (HENDERSON)<br>* claims 2,3 * | 1,4,5 | |
| A | ----- | 2,3 | |

TECHNICAL FIELDS SEARCHED (Int. Cl.5)

B 60 R

The present search report has been drawn up for all claims

| Place of search | Date of completion of the search | Examiner |
|---|---|---|
| BERLIN | 18-12-1991 | STANDRING M A |

European Patent
Office

EP 91107034 − B −

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## LACK OF UNITY OF INVENTION

The Search Division considers that the present European patent application does not comply with the requirement of unity of invention and relates to several inventions or groups of inventions,
namely:

1. Claims 1-6,12: Bumper mounting (energy absorbing)

2. Claims 7-11,13: Motor vehicle (braking system responsive to collision

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims:    1-6,12